# EUROPEAN PATENT SPECIFICATION

(11) **EP 0 464 709 B1**
(45) Date of publication and mention of the grant of the patent: **08.02.1995**
(21) Application number: 91110756.3
(22) Date of filing: 28.06.1991
(51) Int. Cl.: F01N 3/22

(54) **Method for cleaning engine exhaust gas**
Verfahren zur Abgasreinigung von Verbrennungsmotoren
Procédé pour nettoyer les gaz d'échappement des moteurs à combustion interne

(30) Priority: 02.07.1990 JP 172642/90
(43) Date of publication of application: 08.01.1992
(73) Proprietor: MITSUBISHI JUKOGYO KABUSHIKI KAISHA, Tokyo (JP)
(72) Inventor: Serizawa, Satoru c/o Nagasaki Shipyard & Eng.Works, Nagasaki, Nagasaki Pref. (JP); Kaneko, Shozo c/o Nagasaki Shipyard & Engine Works, Nagasaki, Nagasaki Pref. (JP); Imamoto, Toshihiko c/o Nagasaki Shipy. & Eng.Works, Nagasaki, Nagasaki Pref. (JP); Iida, Kazo c/o Hiroshima Technical Institute, 4-chome, Nishi-ku, Hiroshima, Hir. Pref. (JP); Kobayashi, Norihisa c/o Mitsubishi Jukogyo K.K., Chiyoda-ku, Tokyo (JP)
(74) Representative: Behrens, Dieter, Dr.-Ing.

(56) References cited:
- DE-A- 2 231 290
- GB-A- 1 531 347
- US-A- 4 383 408
- PATENT ABSTRACTS OF JAPAN, vol. 13, no. 506 (M-892)[3854], 14th November 1989; & JP-A-1 203 609 (TOYOTA) 16-08-1989
- PATENT ABSTRACTS OF JAPAN, vol. 13, no. 394 (C-631)[3742], 31st August 1989; & JP-A-1 139 145 (TOYOTA) 31-05-1989

## Description

The invention relates to a method for cleaning the exhaust gas of an engine operation in the lean burn region, and specifically it relates to a method for removing NOₓ, organic compounds and CO from an engine exhaust gas to clean the gas.

Heretofore, the treatment of an exhaust gas from a car or the like is usually achieved by removing NOₓ, organic compounds and CO from the exhaust gas with the aid of a three-way catalyst. However, the three-way catalyst can restrictively remove NOₓ from the exhaust gas only in an extremely narrow range of a theoretical or stochiometric air fuel ratio and its neighborhood.

In recent years, demand is very strong for automobiles with low fuel consumption, and as a key technology in response to this demand, a lean burn engine is revived in which combustion is carried out at a stochiometric air fuel ratio or at higher air fuel ratios. However, the lean burn engine exhausts a large amount of NOₓ. As a means to solve this problem, practical catalysts for removing NOₓ in the lean burn region have been developed. This kind of catalysts have a molecular sieve structure and can be formed by ion exchange with copper or the like.

While an automobile is running, the lean burn engine frequently moves between lean and rich burn regions, and thus the employment of a single catalyst cannot provide sufficient NOₓ removal. Therefore, techniques of combining different catalysts have also been suggested.

For example, Japanese Patent Provisional Publication No. 139145/1989 (1-139145) discloses a technique regarding an exhaust gas cleaning catalyst characterized in that a reducing catalyst (one type of catalysts having a molecular sieve structure) in which a transition metal is carried on a zeolite by ion exchange is disposed on the side of the exhaust gas inlet, and an oxidizing catalyst or a three-way catalyst in which a catalytic component is supported on alumina is disposed on the side of the exhaust gas outlet. Furthermore, this publication describes that in order to remove NOₓ by the use of the zeolite, an organic compound is necessary, and for the removal of the remaining organic material, the three-way catalyst or the oxidizing catalyst is disposed on the exhaust gas outlet side.

However, most of reducing agents such as the organic compounds, CO and the like are removed from the exhaust gas by the zeolite catalyst (one type of catalysts having a molecular sieve structure) in the upstream stage, and as a result, there is a problem that the removal of NOₓ cannot be achieved at all or can scarcely be achieved by the three-way catalyst or the oxidizing catalyst in the downstream stage.

When a catalyst having a molecular sieve structure is singly used, the organic compounds which are reducing agents are not active at a theoretical air fuel ratio or in the state of rich burn, and in consequence, the exhaust gas cannot be cleaned. Particularly, in the course of switching from the lean burn state to the rich burn state, olefins, CO and the like which act as reducing agents are decomposed by oxygen adsorbed in the catalyst having a molecular sieve structure, and this oxygen leaks out, so that the concentration of oxygen increases, with the result that sufficient denitration cannot be effected by the three-way catalyst.

Now, some examples of the catalysts having a molecular sieve structure referred to herein include: catalysts, some of which are generally called a zeolite, mainly comprising silica and alumina with an Si/Al ratio of about 5-100 and with a crystalline structure of X type, Y type, ZSM type or the like; a metallosilicate mainly comprising silica, alumina and a metal such as iron with an Si/metal ratio of about 5-100 and with a crystalline structure of X type, Y type, ZSM type or the like; and the above-mentioned zeolite and metallosilicate which are ion exchanged with a transition metal.

The three-way catalyst herein means a catalyst which is capable of simultaneously and effectively treating the three kinds of components, i.e., the organic compounds, CO and NOₓ, in the vicinity of the stochiometric air fuel ratio and in which catalytic components, such as Rh (and Pt or Pd), as a basic component and, if necessary, oxides of Ni, Fe, Co, Mn, Ce and Zr are supported on Al₂O₃ or a cordierite.

Also, the oxidizing catalyst means a catalyst which causes oxygen in the exhaust gas to react with the organic compounds and CO, thereby oxidizing them and decomposing them into CO₂ and H₂O. One typical example of the oxidizing catalyst can be obtained by carrying, as catalytic components, noble metals such as Pt, Pd, Pt-Pd and, if necessary, a trace of Rh on Al₂O₃ or a cordierite. The noble metals can be replaced with base metals, and such catalysts are also included in the meaning of the oxydizing catalyst.

For example, it is widely known that NO, which is the main component of NOₓ, can be decomposed into nitrogen by the use of the zeolite catalyst, even if no reducing agent is present:

2NO → N₂ + O₂

However, this reaction is not practical because of its slow speed and because of a large amount of the catalyst required. When the catalyst having the molecular sieve structure is used and olefins originally present in the exhaust gas or injected from the outside are utilized as the reducing agents, the decomposition reaction of NOₓ rapidly proceeds and a smaller amount of the catalyst is enough.

However, when oxygen is not present at all or present only in small amounts, organic compounds such as the olefins cannot be sufficiently converted into substances such as CH₂O and the like which are active to NOₓ. In consequence, when the concentration of oxygen in the exhaust gas changes or it is low, the above-mentioned catalyst having the molecular sieve structure is required to be combined with the three-way catalyst, which is active at the stochiometric air fuel ratio and in the rich burn range.

Even if the catalysts are combined as described above, both catalysts are not active at an oxygen concentration of about 0.7%, so that a denitration rate is low and hence the cleaning efficiency is not high on the whole. For this reason, there is a problem that the total denitration ratio is not improved.

If the catalyst having the molecular sieve structure is combined with the three-way catalyst, most of the reducing agents are removed by the catalyst disposed in the upstream position, and thus NOₓ can scarcely be removed from the exhaust gas by the catalyst in the downstream position and, what is worse, nitrogen compounds such as ammonia and the like are oxidized, with the result that the amount of NOₓ increases.

Accordingly, in order to effectively remove NOₓ from the exhaust gas and minimize the amount of the organic compounds to be discharged, it is required to inject a reducing agent in an amount necessary to reduce NOₓ, but the injection of the reducing agent effectively increases the consumption of a fuel in some cases, which is contrary to the intended purpose.

From JP-A-1-203 609 it is known to reduce the amount NOx, CO and HC gases present in the exhaust gas of a combustion engine by using a catalyst composed of Cu or CuO and zeolite and injecting air into the catalyst layer to keep an air-fuel ratio at 14.6 or less. In this way the exhaust gas is said to be cleaned with high efficiency without exposing the catalyst to the reductive atmosphere of exhaust gas.

In view of the above-mentioned state of art, an object of the present invention is to provide a method for simultaneously and effectively removing NOₓ, organic compounds and CO from an exhaust gas discharged from an engine which operates in a lean burn region.

The present invention is directed to a method for cleaning a lean burn engine exhaust gas using a catalyst and injecting an oxygen containing gas into the exhaust gas characterized in that the gas containing oxygen like air is injected immediately before the exhaust gas discharged from an engine is brought into contact with a catalyst having a molecular sieve structure including catalysts of the zeolite type, mainly comprising silica and alumina with an Si/Al ratio of about 5-100 and with a crystalline structure of X type, Y type, ZSM type or similar type, or of the metallosilicate type mainly comprising silica, alumina and a metal such as iron with an Si/metal ratio of about 5-100 and with a crystalline structure of X type, Y type, ZSM type or similar type, so that an oxygen concentration in the exhaust gas may be from 1 to 13%, when the engine is operated at an air-fuel ratio of a stochiometric air fuel ratio or of a higher air-fuel ratio.

In the invention, a three-way catalyst can be additionally disposed on the downstream side of the catalyst having the molecular sieve structure.

The invention will be described in more detail. According to the present invention, a gas containing oxygen such as air or an exhaust gas is injected on the upstream of the catalyst having the molecular sieve structure by the use of an air compressor or the like, whereby the oxygen concentration in the exhaust gas is maintained at a level high enough to clean the exhaust gas. The oxygen concentration is preferably about 2%.

When an automobile is normally driven, the engine of the car frequently moves between the lean and rich burn regions, and therefore, in order to obtain a high denitration ratio on the whole, the catalyst having the molecular sieve structure can be combined with the three-way catalyst. When such a combination of the catalysts is employed, the gas containing oxygen such as air is injected on the upstream of the catalyst having the molecular sieve structure in the region where the activity of the three-way catalyst and the catalyst having the molecular sieve structure is not high, whereby the activity of the catalyst having the molecular sieve structure can be improved and the cleaning efficiency of the exhaust gas can be improved.

Since there exists an optimum oxygen concentration for efficient operation, the amount of a gas containing oxygen such as air can be controlled so as to maintain this optimum oxygen concentration. For example, an oxygen sensor can be disposed on the upstream or the downstream side of the catalyst having the molecular sieve structure, and the oxygen concentration can be controlled by means of a controlling apparatus such as a computer. This control can always be performed during the operation of an automobile.

In the above-mentioned means, the reducing agents such as organic compounds and CO which are produced or not decomposed by the catalyst having the molecular sieve structure can be measured by a detector for hydrocarbons, CO and the like disposed on the downstream side of the exhaust gas, whereby amounts of NOₓ, the hydrocarbons or other reducing agents to be discharged can be controlled so as to minimize these amounts or to control them constant.

Reference will be made to an embodiment in which the catalyst having the molecular sieve structure and carrying a transition metal such as copper is disposed in the upstream position and the three-way catalyst is disposed in the downstream position. However, the three-way catalyst is not always necessary.

An exhaust gas discharged from an automobile or the like contains NOₓ, organic compounds, CO, H₂ and the like. In the lean burn region, where the exhaust gas contains a large amount of remaining oxygen, the air injection is not carried out, and NOₓ is decomposed by the reducing function of the olefin series organic compounds in the presence of the catalyst having the molecular sieve structure and CO is also decomposed simultaneously. On the downstream side in which the three-way catalyst is disposed, the remaining NOₓ is not further decomposed in the presence of oxygen, but the remaining organic compounds and CO are only decomposed and then discharged from the car. That is, NOₓ, the organic compounds and CO can be all removed from the exhaust gas sufficiently.

On the other hand, in the rich burn region the exhaust gas contains a smaller amount of oxygen, and therefore NOₓ is scarcely removed from the exhaust gas by the catalyst having the molecular sieve structure. Therefore, air is injected into the exhaust gas in the rich burn region to obtain the same oxygen concentration as in the lean burn region, and NOₓ is reduced with the olefin series organic compounds in the presence of the same catalyst having the molecular sieve structure as described above, with the result that NOₓ and the olefin series organic compounds are decomposed and simultaneously CO is also decomposed. Furthermore, when the three-way catalyst is disposed in the downstream position, the remaining organic compounds and CO are decomposed to discharge the cleaned exhaust gas.

In an intermediate region in which an air fuel ratio is slightly higher than a theoretical air fuel ratio and is not so lean, the amount of oxygen is excessive to the three-way catalyst but insufficient to the catalyst having the molecular sieve structure. Therefore, both the catalysts are less active, and so a denitration efficiency is poor on the whole. Accordingly, air is injected immediately in front of the catalyst having the molecular sieve structure so that the oxygen concentration may be from 1 to 13%.

When the catalyst having the molecular sieve structure is singly used in the absence of oxygen, the olefin series organic compounds cannot be converted into CH₂O and the like which are active to NOₓ and the denitration cannot be achieved. It is necessary that the oxygen content is from 1 to 13%, preferably about 2%. For example, in the rich burn region or the partially lean burn region, the catalyst having the molecular sieve structure scarcely contributes to the denitration, but when a small amount of air is injected and the oxygen concentration in the exhaust gas is adjusted to be about 2%, the denitration ratio is as high as 70% or more, depending upon the concentration of the organic compounds.

The present invention will be described in more detail in reference to examples.
FIG. 1 is a graph showing the oxygen concentration dependence of a catalyst having a molecular sieve structure which is used in the present invention; and
FIG. 2 is a schematic view showing the flow of one embodiment of the present invention.

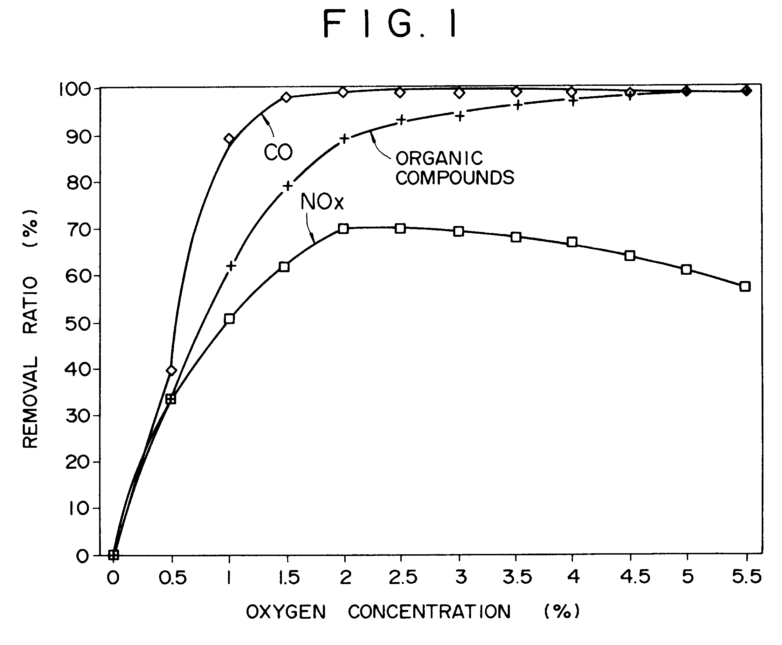

As shown in FIG. 1, the denitration ratio of a catalyst having a molecular sieve structure rises along with the increase of an oxygen concentration, but it begins to drop, when the oxygen concentration exceeds a certain level. In many cases, the maximum denitration ratio is attained at an oxygen concentration of about 2%, depending upon conditions of an exhaust gas. When the oxygen concentration is in the vicinity of 0%, the denitration scarcely occurs.

When the oxygen concentration further increases, the denitration ratio gradually descends.

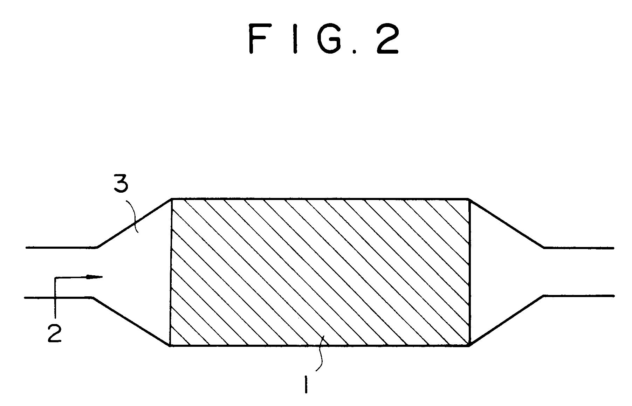

As shown in FIG. 2, when a gas 2 containing oxygen such as air is injected under control in front of the catalyst 1 having the molecular sieve structure so that the oxygen concentration at a position 3 may be about 2%, the denitration ratio can be heightened.

The performance and heat resistance of the catalyst 1 having the molecular sieve structure are largely affected by the copper ion exchange ratio, and the higher the copper ion exchange ratio is, the more the low-temperature activity and the heat resistance are improved. However, when the high-temperature activity exceeds a certain level, the organic compounds burn out instead of acting on NOₓ. Therefore, the optimum copper ion exchange ratio is present between the above-mentioned limits. The maximum value of the copper ion exchange ratio is not limited to 100%, and it has been recently elucidated that an exchange ratio of 100% or more is also possible. When the exchange ratio is 100% or more, the heat resistance of the catalyst 1 is more excellent.

In consequence, it is necessary that the copper ion exchange ratio is properly set considering conditions such as the temperature of the exhaust gas and the like.

The present invention can achieve the following functional effects.
(1) The removal efficiency of NOₓ, organic compounds CO, H₂ and the like can be improved.
(2) Exhaust gases resulting from widespread air fuel ratios can be treated, and it is possible to stably clean such an exhaust gas as discharged from an automobile in which the air fuel ratio as well as amounts of NOₓ, organic compounds, CO and the like in the exhaust gas change.
(3) A three-way catalyst can be omitted, depending upon conditions.
(4) The amount of a catalyst having a molecular sieve structure can be decreased.
(5) The increase of NOₓ due to the reduction of nitrogen compounds can be prevented.

## Claims

1. A method for cleaning the exhaust gas of an engine operating in a lean burn region, using a catalyst and injecting an oxygen containing gas into the exhaust gas characterized in that the gas containing oxygen is injected immediately before the exhaust gas discharged from the engine, is brought into contact with a catalyst having a molecular sieve structure including catalysts of the zeolite type, mainly comprising silica and alumina with an Si/Al ratio of about 5-100 and with a crystalline structure of X type, Y type, ZSM type or similar type, or of the metallosilicate type mainly comprising silica, alumina and a metal such as iron with an Si/metal ratio of about 5-100 and with a crystalline structure of X type, Y type, ZSM type or similar type, so that the oxygen concentration in the exhaust gas is from 1 to 13% when the engine is operated at a stochiometric air fuel ratio or at higher air fuel ratios.

2. The method of claim 1, wherein a three-way catalyst is disposed on the downstream side of the catalyst having the molecular sieve structure.

3. The method of claim 1 or 2, wherein an oxygen sensor for the measurement of oxygen concentration is disposed in an upstream or downstream position of the catalyst having the molecular sieve structure, and the amount of the gas containing oxygen to be injected is controlled such, so that the desired oxygen concentration is obtained before or behind the catalyst having the molecular sieve structure.

4. The method of any one of claims 1 to 3, wherein the amount of harmful gas components is measured by a detector for the harmful gas components disposed in a downstream position of the catalyst, and the amount of the gas containing oxygen to be injected is controlled so as to control the amounts of the harmful gas components discharged into atmosphere.

## Patentansprüche

1. Verfahren zum Reinigen der Abgase eines im Magerbetrieb betriebenen Motors unter Benutzung eines Katalysators und mit Einblasen eines Sauerstoff enthaltenden Gases in das Abgas,
dadurch **gekennzeichnet,** daß
das Sauerstoff enthaltende Gas eingeblasen wird unmittelbar bevor das vom Motor ausgestoßene Abgas mit einem Katalysator mit Molekularsiebstruktur, einschließlich Katalysatoren des Zeolith-Typs, der hauptsächlich Silizium- und Aluminiumoxid in einem Si/Al-Verhältnis von etwa 5-100 und einer Kristallstruktur des X-, Y-, ZSM- oder eines ähnlichen Typs aufweist, oder des Metall-Silikat-Typs, der hauptsächlich Siliziumoxid, Aluminiumoxid und ein Metall, z.B. Eisen, in einem Si/Metall-Verhältnis von etwa 5-100 und einer Kristallstruktur des X-, Y-, ZSM- oder eines ähnlichen Typs umfaßt, in Berührung gebracht wird, so daß die Sauerstoffkonzentration im Abgas zwischen 1 und 13% beträgt, wenn der Motor mit einem stöchiometrischen oder mit höheren Luft-Kraftstoff-Verhältnissen betrieben wird.

2. Verfahren nach Anspruch 1,
bei dem ein Dreiwege-Katalysator dem Katalysator mit Molekularsieb-Struktur nachgeschaltet ist.

3. Verfahren nach Anspruch 1 oder 2, bei dem
- ein Sauerstoff-Meßfühler zum Messen der Sauerstoffkonzentration dem Katalysator mit Molekularsieb-Struktur voroder nachgeschaltet ist, und
- die einzublasende Menge des Sauerstoff enthaltenden Gases gesteuert wird,
derart, daß die gewünschte Sauerstoffkonzentration vor oder hinter dem Katalysator mit Molekularsiebstruktur erzielt wird.

4. Verfahren nach einem der Ansprüche 1 bis 3, bei dem
- die Menge schädlicher Gaskomponenten durch einen Detektor für schädliche Gaskomponenten gemessen wird, der dem Katalysator nachgeschaltet ist, und
- die einzublasende Menge des Sauerstoff enthaltenden Gases gesteuert wird, damit die in die Atmosphäre abgegebenen Mengen der schädlichen Gaskomponenten gesteuert werden.

## Revendications

1. Procédé pour épurer les gaz d'échappement d'un moteur à combustion interne fonctionnant dans une plage de combustion maigre, en utilisant un catalyseur et en injectant un gaz contenant de l'oxygène dans le gaz d'échappement, caractérisé en ce que le gaz contenant de l'oxygène est injecté immédiatement avant que le gaz d'échappement déchargé du moteur ne soit mis en contact avec un catalyseur ayant une structure moléculaire de tamis comprenant des catalyseurs du type à zéolithe, comprenant principalement de la silice et de l'alumine avec une proportion Si/Al d'environ 5-100 et présentant une structure cristalline du type X, du type Y, du type ZSM ou d'un type similaire, ou du type à silicate métallique comprenant principalement de la silice, de l'alumine et un métal tel que le fer, avec une proportion Si/métal d'environ 5-100 et présentant une structure cristalline du type X, du type Y, du type ZSM ou d'un type similaire, de sorte que la concentration en oxygène dans le gaz d'échappement soit de 1 à 13% lorsque le moteur fonctionne à une proportion air combustible stoechiométrique ou à des proportions air combustible plus élevées.

2. Procédé selon la revendication 1, dans lequel un catalyseur à trois voies est disposé du côté aval du catalyseur ayant une structure moléculaire de tamis.

3. Procédé selon la revendication 1 ou 2, dans lequel un détecteur d'oxygène pour la mesure de la concentration en oxygène est disposé en aval ou en amont du catalyseur ayant la structure moléculaire de tamis, et la quantité de gaz contenant de l'oxygène à injecter est régulée de telle sorte que la concentration désirée en oxygène soit obtenue avant ou après le catalyseur à structure moléculaire de tamis.

4. Procédé selon l'une quelconque des revendications 1 à 3, dans lequel la quantité de composants nocifs du gaz est mesurée par un détecteur de composants nocifs de gaz disposé en aval du catalyseur, et la quantité de gaz contenant l'oxygène à injecter est régulée afin de réguler les quantités de composants nocifs de gaz déchargés dans l'atmosphère.
